# EUROPEAN PATENT SPECIFICATION

(11) **EP 3 983 791 B1**
(45) Date of publication and mention of the grant of the patent: **22.04.2026**
(21) Application number: 19731944.5
(22) Date of filing: 14.06.2019
(51) Int. Cl.: G01N 29/22, G01M 17/08, G01N 29/24, G01N 29/265

(54) **PROBE SUPPORT APPARATUS FOR AN ULTRASONIC FLAW DETECTOR, ULTRASONIC FLAW DETECTOR AND METHOD FOR INSPECTING A WHEELSET AXLE**
SONDENTRÄGERVORRICHTUNG FÜR EINEN ULTRASCHALLFEHLERDETEKTOR, ULTRASCHALLFEHLERDETEKTOR UND VERFAHREN ZUR INSPEKTION EINER RADSATZACHSE
APPAREIL DE SUPPORT DE SONDE POUR DÉTECTEUR DE DÉFAUTS PAR ULTRASONS, DÉTECTEUR DE DÉFAUTS PAR ULTRASONS ET PROCÉDÉ D'INSPECTION D'UN ESSIEU MONTÉ

(43) Date of publication of application: 20.04.2022
(73) Proprietor: Framatome GmbH, 91052 Erlangen (DE)
(72) Inventor: REHFELDT, Thomas, 91052 Erlangen (DE); BRESLER, Johannes, 91052 Erlangen (DE); FRIEDRICH, Christian, 91052 Erlangen (DE)
(74) Representative: Lavoix
(86) International application number: PCT/EP2019/065738
(87) International publication number: WO 2020/249238

(56) References cited:
- EP-A1- 3 093 657
- CN-U- 203 479 760
- US-A1- 2013 340 531
- US-B1- 8 087 298

## Description

The invention relates to a probe support apparatus for an ultrasonic flaw detector.

Furthermore, the invention relates to an ultrasonic flaw detector comprising such a probe support apparatus.

Additionally, the invention relates to a method for inspecting a wheelset axle using such an ultrasonic flaw detector, wherein the wheelset axle is rotatable about an axis of rotation and comprises at least a first wheel located at an axial end of a shaft and at least a first brake support portion being provided on the shaft.

Ultrasonic flaw detectors and corresponding methods for inspecting wheelset axles are known in the art. One field of application thereof is the inspection of wheelset axles being used in railway vehicles. The purpose of such an inspection is to detect cracks and defects of the axle.

In this context, it is known to dismount a wheelset axle from a corresponding railway truck and position it in an inspection facility. Subsequently, an ultrasound beam is applied to the wheelset axle in an axial direction thereof. This method allows for the inspection of big portions of the wheelset axle's volume. Depending on the setting, up to 100% of the wheelset axle's volume may be inspected.

It is also known to inspect wheelset axles of railway vehicles using a handheld ultrasonic flaw detector, i.e. the inspection is performed manually. In order to access the relevant areas of the wheelset axle, it may be necessary to dismount axial bearing covers as a preparatory measure. Apart from that, the wheelset axle may remain in its mounted state. Due to geometrical restrictions in the surroundings of the wheelset axle, less than 100% of its volume may be inspected.

US 8 087 298 B1 describes an ultrasonic probe deployment device in which an ultrasound-transmitting liquid forms the portion of the ultrasonic wave path in contact with the surface being inspected.

It is an object of the present invention to provide an improved ultrasonic flaw detector and an improved corresponding method for inspecting a wheelset axle that combine the advantage of an inspection using a handheld ultrasonic flaw detector, i.e. not having to dismount the axle, and the advantage of an inspection using an inspection facility, i.e. inspecting 100% of the wheelset axle's volume.

The problem is solved by a probe support apparatus according to claim 1.

It is understood that the terms "first" and "second" are used for the purpose of a succinct explanation only. These terms do not imply a specific number of receptacles. Preferably, the axes of rotation of both magnetic rollers are oriented perpendicularly to the travelling direction of the probe support apparatus.

Additionally or alternatively, the middle axis of the first receptacle and the middle axis of the second receptacle are non-perpendicular to the travelling direction. Such a probe support apparatus is well adapted for inspecting wheelset axles of railway vehicles. In this context, the travelling direction substantially corresponds to a circumferential direction of any cylindrical portion of the wheelset axle. This relates especially to portions having the form of a circular cylinder. Thus, the axes of rotation of both magnetic rollers are substantially parallel to an axis of rotation of the wheelset axle to be inspected. In such a setting, the inclination of the receptacles allows for positioning the probe heads in a substantially tangential manner on the wheelset axle to be inspected. As a consequence thereof, a big portion of the wheelset axle's volume may be inspected. The inclination is preferably chosen such that an intersection of the middle axes of the receptacles is on the axis of rotation of the shaft to be inspected. In doing so, the probe support apparatus may be adapted to shafts having diameters in the range of 120 mm to 400 mm, especially having a diameter of 170 mm or 320 mm. Such diameters are usual in the fields of railway vehicles.

Furthermore, such a probe support apparatus is very compact and therefore makes it possible to have probe portions of ultrasonic flaw detectors that are very compact, especially when referring to the space needed for circumferentially rotating the probe portion around a shaft of a wheelset axle. In this context, the probe portion of an ultrasonic flaw detector is the part which carries the probes and is in direct contact with the object to be inspected. This configuration makes it possible to provide an ultrasonic flaw detector which is usable without dismounting the wheelset axle from the vehicle. In other words, the advantages of the inspection methods mentioned above are combined.

The probe support apparatus may also comprise a motor receptacle and a drive motor supported in the motor receptacle, wherein at least one of the magnetic rollers is coupled with the drive motor, especially wherein at least one of the magnetic rollers is coupled with the drive motor via a belt drive. Consequently, the probe support apparatus is able to move on the surface of an object to be inspected, e.g. a wheelset axle, without external propulsion. If the object to be inspected contains magnetic material, the adhesion of the probe support apparatus to the surface of this object is guaranteed by the magnetic rollers. Since for a complete ultrasonic scan the probe support apparatus has to cover the circumference of a portion of a wheelset axle substantially once, the energy supply of the drive motor may be realized by cables without any problems. Consequently, the probe support apparatus may be used in relatively confined spaces and also may be moved inside such spaces. Consequently, such a probe support apparatus may be operated in spaces, which are not accessible by handheld flaw detectors or probe support apparatuses.

According to an embodiment, a back portion of the probe support apparatus has the shape of a convex arc. In this context, the back portion of the probe support apparatus is opposed to the opening side of the receptacles and also opposed to the side of the rollers which is configured to interact with an object to be inspected. Thus, during operation, the back portion is also opposed to the object to be inspected. The fact of being convex means that a straight connection between the front end of the probe support apparatus and the back end of the probe support apparatus, when regarded in a travelling direction of the probe support apparatus, is shorter than the back portion spanning from the front end to the backend. Such a probe support apparatus is especially well suited for being moved around the circumference of an object to be inspected. This is especially the case if the space around this object is restricted. Furthermore, the shape of a convex arc makes it possible that such a probe support apparatus is in contact with flexible elements around an object to be inspected without damaging these flexible elements, e.g. cables or tubes, and without the flexible elements disturbing the operation of the probe support apparatus. This is especially due to the absence of edges and corners in the back portion of the probe support apparatus.

According to a variant, the probe support apparatus additionally comprises a bracket, wherein the magnetic rollers are mounted on the bracket and the at least two receptacles for ultrasonic probes are provided on the probe holder being mounted on the bracket, in particular wherein the probe holder is movably mounted on the bracket. Preferably, the bracket and probe holder are separate from each other, i.e. separate parts. Consequently, the receptacles for ultrasonic probes and the wheels may be adjusted with respect to each other. In doing so, the probe support apparatus may easily be adjusted to different geometries of objects to be inspected. Therefore, high quality scans may be performed and the volumes of objects to be inspected may be inspected at 100%.

The bracket may be substantially U-shaped when regarded along one of the axes of rotation of the magnetic rollers, wherein a first flank of the bracket comprises the front end and a second flank of the bracket comprises the back end and/or wherein the probe holder is arranged between the flanks of the bracket. In this context, the term "flank" designates a flank of the U-shape. Consequently, the probe holder is arranged inside the U-shape, i.e. between the flanks and adjacent to a base of the U-shape. Such a configuration is space saving.

Preferably, a spacer is interposed between the bracket and the probe holder. The spacer is especially positioned between a base of the U-shape and the probe holder. This is a simple and reliable method for adjusting the position of the receptacles and thus the probes with respect to the rollers. This means that the position of the probes is also adjusted with respect to a surface of the object to be inspected, which is in contact with the rollers during operation. This enhances the quality of ultrasonic scans and allows for the inspection of 100% of the object's volume. In doing so, the probe support apparatus may for example be adapted to different diameters of objects to be inspected having the form of a circular cylinder, e.g. shafts.

Moreover, the probe holder may be in contact with both flanks of the U-shape in any relative position between the probe holder and the bracket. Consequently, the probe holder is reliably and precisely positioned inside the probe support apparatus.

A probe biasing means is provided in each receptacle, the probe biasing means being configured to bias the respective probe to the outside of the corresponding receptacle, especially wherein each biasing means comprises a spring. These biasing means may be used for pressing probes located inside the receptacles against a surface of an object to be inspected. This allows for a high quality ultrasonic coupling of the probes and the object to be inspected and therefore leads to high quality inspection results.

The probe support apparatus may also comprise a first opening being provided between the receptacles and connecting a first lateral side and a second, opposed lateral side, when regarded in the travelling direction and/or a second opening being provided at the backside of each receptacle and connecting a first lateral side and a second, opposed lateral side, when regarded in the travelling direction. It is noted that the terms "first" and "second" are used for the purpose of a succinct explanation only. These terms do not imply a specific number of openings. For example, a probe support apparatus may only have one opening which is designated a second opening. These openings may form part of a lightweight design of the probe support apparatus. In other words, the openings reduce the weight of the probe support apparatus, therefore making it especially suitable for being held on the surface of an object to be inspected by the magnetic rollers only.

Preferably, the first opening is wedge-shaped. Since the receptacles are inclined with respect to each other, the first opening may be relatively wide in a region where the distance between the receptacles is relatively big and the first opening may be relatively narrow in a region where the distance between the receptacles is relatively small. Consequently, the first opening is well adapted to the inclination of the receptacles and the effect of weight saving is increased.

Furthermore, the problem is solved by an ultrasonic flaw detector of the type mentioned above comprising a probe support apparatus according to the invention and at least two ultrasonic probes, wherein each of the receptacles holds one of the ultrasonic probes. The middle axis of the receptacles are substantially perpendicular to the corresponding front sides of their respective ultrasonic probe. In this configuration the front sides of the probes are preferably oriented tangentially to a surface of an object to be inspected. Consequently, the ultrasonic coupling of the probes and the object to be inspected is of high quality. Furthermore, all features and advantages already explained with respect to the probe support apparatus also apply to the ultrasonic flaw detector comprising such a probe support apparatus and vice versa.

A beam direction of one of the ultrasonic probes may be tilted to a first lateral side, when regarded in the travelling direction, and a beam direction of another one of the ultrasonic probes may be tilted to a second lateral side being opposed to the first lateral side. Thus, if the ultrasonic flaw detector is used to inspect an object having the form of a circular cylinder, the ultrasonic beams originating from both ultrasonic probes have a respective first component being oriented in a radial direction of the object and a respective second, axial component, wherein the axial components are oriented in opposed directions. If a probe portion of the ultrasonic flaw detector, preferably comprising the probe support apparatus described above, is rotated with respect to this object, 100% thereof may be inspected.

In order to further increase the volume to be inspected without having to place the probe portion in an increased number of locations on the object to be inspected, the ultrasonic beam of the probes may swivel during operation. In this context, all beam directions inside the swiveling range are tilted as described above. This allows for a 100% coverage of relatively extended objects to be inspected.

Advantageously, at least one, in particular each of the ultrasonic probes comprises a longitudinal wave generator. It has been discovered that longitudinal waves are less attenuated by anti-corrosion coatings and anti stone impact coatings which are often used on wheelset axles of railway vehicles. Therefore, such probes are especially suited for the inspection of railway vehicle axles. Furthermore, it has been discovered that for achieving the same inspection result, longitudinal wave generators may be smaller than transversal wave generators. This is especially true for the width direction thereof, when seen in the travelling direction of a corresponding probe support apparatus. In an example case, the longitudinal wave generator may be 50 mm wide, wherein a comparable transversal wave generator may be 60 mm wide. Consequently, longitudinal wave generators allow for the construction of small ultrasonic flaw detectors which can be used in confined spaces.

Moreover, the problem is solved by a method for inspecting a wheelset axle according to claim 11.

It is noted that the terms "first" and "second" are used for the purpose of a succinct explanation only. These terms do not imply a specific number of positions or scans. For example, a probe portion may be put in a second axial position before being put in a first axial position.

In this context, the probe portion of an ultrasonic flaw detector is the part which carries the probes and is in direct contact with the object to be inspected, i.e. the wheelset axle.

The brake support portion may be a brake disc being integral with a shaft of the wheelset axle or a support for a brake being provided as a part separate from the shaft and mounted thereon with known means. This method allows for inspecting a high percentage of the volume of a wheelset axle with two scanning positions only.

Preferably, an ultrasonic flaw detector according to the invention is used for performing the above method. This means that the probe portion comprises a probe support apparatus according to the invention. As has already been explained above, such a probe portion is well suited for being used in confined spaces. Therefore, a corresponding probe portion is especially well suited for being used in the first axial position. In know wheelset axles of railway vehicles, the distance between the wheel and the brake support may only be approximately 100 mm.

Preferably, the method is applied for inspecting solid wheelset axles, i.e. wheelset axles without a longitudinal bore.

The wheelset axle may additionally comprise a second wheel, wherein the first wheel and the second wheel are located at opposing axial ends of the shaft, and a second brake support portion being provided on the shaft, wherein the first brake support portion is positioned closer to the first wheel than to the second wheel and the second brake support portion is positioned closer to the second wheel than to the first wheel, the method comprising the following steps:
a) Placing the probe portion of the ultrasonic flaw detector at a third axial position on the shaft which is located between the second wheel and the second brake support portion,
b) Rotating the probe portion around a circumference of the shaft at the third axial position while performing a third ultrasonic scan,
c) Placing the probe portion at a fourth axial position on the shaft which is located between the first brake support portion and the second brake support portion, and
d) Rotating the probe portion around a circumference of the shaft at the fourth axial position, while performing a fourth ultrasonic scan.

Again, it is noted that the terms "first", "second", "third" and "fourth" are used for the purpose of a succinct explanation only. When inspecting such a wheelset axle, also the second position is located between the first brake support portion and the second brake support portion.

In this context, the second axial position is closer to the first brake support portion than to the second brake support portion and the fourth axial position is closer to the second brake support portion than to the first brake support portion. Usually, the axial distance between the brake support portions is bigger than an axial distance between each of the brake support portions and the neighboring wheel.

Advantageously, the method is performed in a mounted state of the wheelset axle. This means that the wheelset axle is not dismounted from the vehicle where it is used, which is especially a railway vehicle. Consequently, all efforts related to the dismounting of the wheelset axle are unnecessary, which leads to great savings in time and costs for the preparation of an inspection of a wheelset axle. Consequently, only a short stop of a railway vehicle is sufficient for inspecting the corresponding wheelset axles.

The invention will now be explained with reference to different embodiments which are shown in the attached drawings. In the drawings,
- Figure 1 shows in a side view a first embodiment of an ultrasonic flaw detector according to the invention comprising a probe support apparatus according to the invention and being suitable for performing a method according to the invention,
- Figure 2 shows a bracket of the probe support apparatus of Figure 1 in a perspective view,

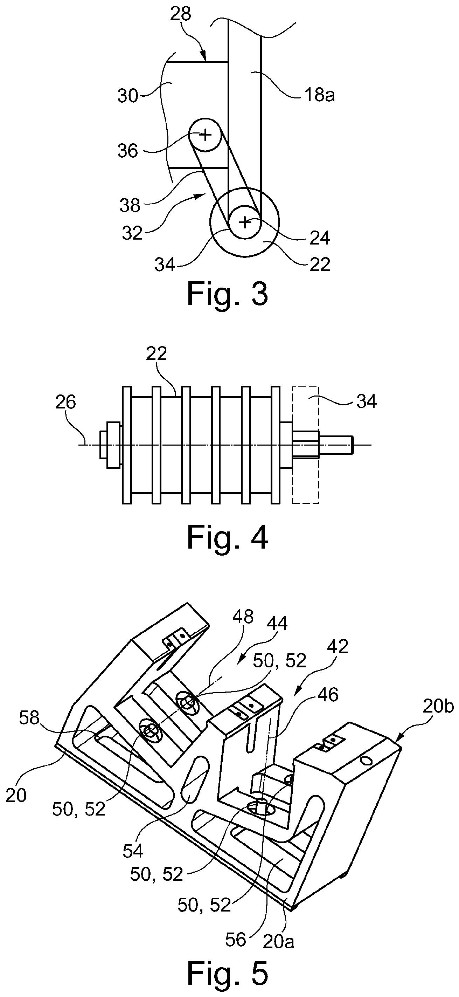

- Figure 3 schematically shows a detail of the probe support apparatus of Figure 1,
- Figure 4 shows a magnetic roller of the probe support apparatus of Figure 1,
- Figure 5 shows a probe holder of the probe support apparatus of Figure 1,
- Figure 6 shows a wheelset axle of a railway vehicle comprising two wheels and two brake disks,
- Figure 7 illustrates the inspection of the wheelset axle of Figure 6 using a method for inspecting a wheelset axle according to the invention,
- Figure 8 shows the ultrasonic flaw detector of Figure 1 during inspection of a wheelset axle of Figure 6 in a sectional view,
- Figure 9 shows the ultrasonic flaw detector of Figure 1 during inspection of a variant of the wheelset axle of Figure 6 in a sectional view,
- Figure 10 shows an ultrasonic flaw detector according to a further embodiment of the invention comprising a probe support apparatus according to another embodiment of the invention and being suitable for performing a method according to the invention,
- Figure 11 shows a probe holder of the probe support apparatus of Figure 10, and
- Figure 12 shows the ultrasonic flaw detector of Figure 10 during inspection of a wheelset axle.

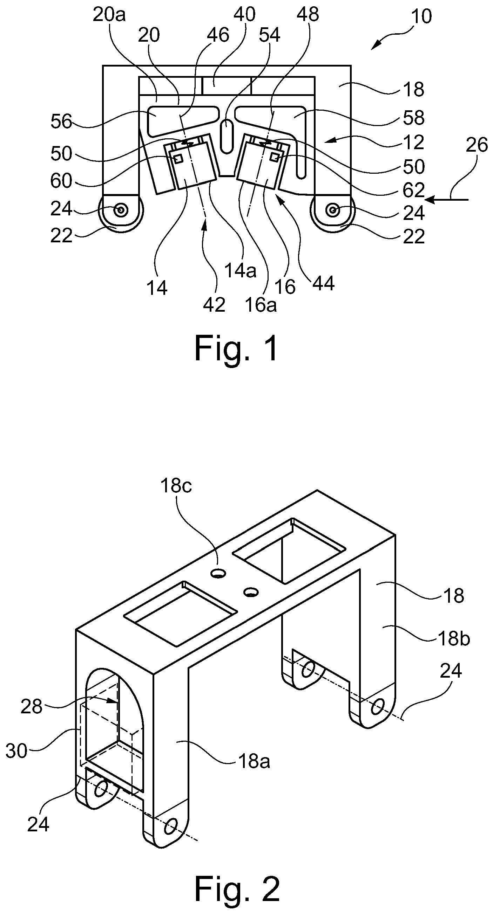

Figure 1 shows an ultrasonic flaw detector 10 comprising a probe support apparatus 12 and two ultrasonic probes 14, 16.

The probe support apparatus 12 of the first embodiment is composed of a bracket 18, a probe holder 20 being separate from the bracket 18 and two magnetic rollers 22 being rotatable about a respective axis 24 of rotation.

The bracket 18 is substantially U-shaped when regarded along one of the axes 24 of rotation and comprises two flanks 18a, 18b and a base section 18c.

Seen in a travelling direction 26 of the probe support apparatus 12 the first flank 18a of the U-shaped bracket 18 comprises a front end of the probe support apparatus 12 and the second flank 18b of the U-shaped bracket 18 comprises a back end of the probe support apparatus 12.

One of the magnetic rollers 22 is supported at the front end of the bracket 18 and one of the magnetic rollers 22 is supported at the back end of the bracket 18. In other words, one roller 22 is supported on the first flank 18a and the other roller is supported on the second flank 18b.

The axes 24 of rotation are parallel to each other and substantially oriented perpendicularly to the travelling direction 26.

Furthermore, a motor receptacle 28 is provided on the bracket 18 and a drive motor 30 is supported in the motor receptacle 28.

The drive motor 30 is coupled to one of the magnetic rollers 22 via a belt drive 32.

More precisely, the magnetic roller 22 to be driven is equipped with a first pulley 34 and a drive shaft of the drive motor 30 is coupled to a second pulley 36. Both pulleys 34, 36 are coupled by a belt 38.

The probe holder 20 is arranged between the flanks 18a, 18b of the U-shaped bracket 18. In other words, the probe holder 20 is located inside the "U".

It is mounted to the base section 18c of the U-shaped bracket 18 via a spacer 40. Consequently, a distance between the base section 18c of the "U" and a back side of the probe holder 20 may be adapted by using different spacers 40.

Additionally, two receptacles 42, 44 for the ultrasonic probes 14, 16 are provided on the probe holder 20.

Both receptacles 42, 44 are inclined towards each other such that a middle axis 46 of the receptacle 42 and a middle axis 48 of the receptacle 44 are inclined towards each other. Furthermore, both middle axes 46, 48 are perpendicular to the axes 24 of rotation of the rollers 22.

Moreover, in each of the receptacles 42, 44, a probe biasing means 50 is provided, being configured to bias the respective probe 14, 16 to the outside of the corresponding receptacle 42, 44.

In the example shown, each biasing means 50 comprises a pair of springs 52.

In order to reduce the weight of the probe support apparatus 12, it comprises a first opening 54, which is arranged between the receptacles 42, 44.

It has the form of a clearance hole and connects a first lateral side 20a and a second, opposed lateral side 20b of the probe holder 20, when regarded in the travelling direction 26.

Second openings 56, 58 are additionally provided at the backside of each receptacle 42, 44.

Also the second openings are clearance holes and connect the first lateral side 20a and the second lateral side 20b of the probe holder 20.

The probes 14, 16 are supported in the receptacles 42, 44 respectively such that the middle axes 46, 48 of the receptacles 42, 44 are substantially perpendicular to the corresponding front sides 14a, 16a of their respective ultrasonic probe 14, 16.

Both ultrasonic probes 14, 16 comprise a longitudinal wave generator 60, 62 and thus are able to emit longitudinal ultrasonic waves.

As will also be explained later, a beam direction of one of the probes 14, 16 is tilted to the first lateral side 20a, when regarded in the travelling direction 26, and a beam direction of the other of the probes 14, 16 is tilted to the second lateral side 20b.

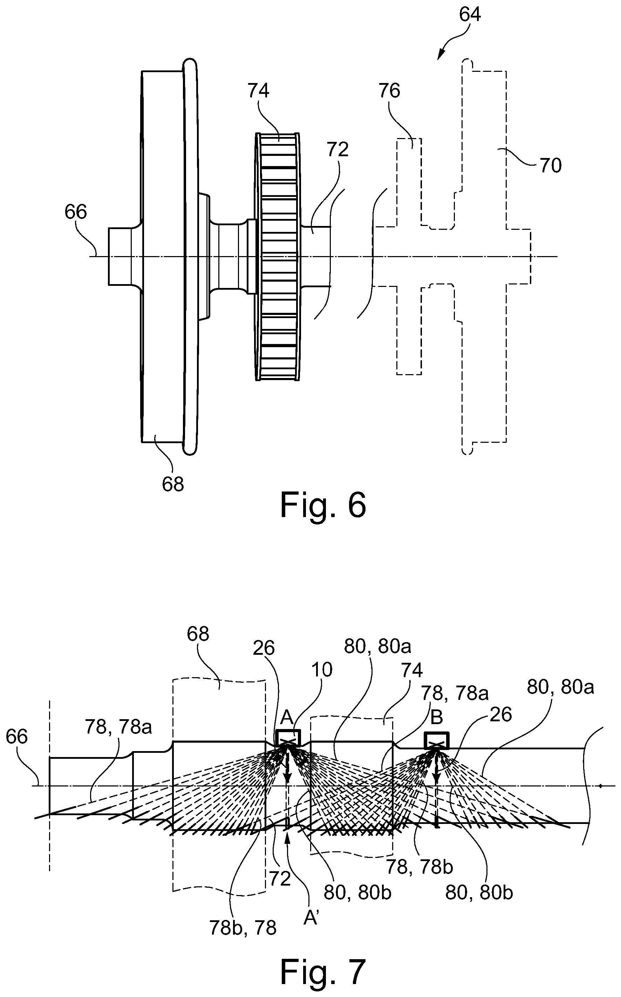

The ultrasonic flaw detector 10 may be used for inspecting a wheelset axle 64 of a railway vehicle. This is illustrated in Figures 6 to 9.

Even though the wheelset axle 64 is represented separately from neighboring components of a corresponding railway truck, the inspection of the wheelset axle 64 using the ultrasonic flaw detector 10 may be performed in a mounted state of the wheelset axle 64.

The wheelset axle 64 is rotatable about an axis 66 of rotation and comprises a first wheel 68 and an optional second wheel 70.

Both wheels 68, 70 are located at axial ends of a shaft 72 of the wheelset axle 64.

Also a first brake support portion 74 and an optional second brake support portion 76 are provided on the shaft 72. In the example shown, both brake support portions 74, 76 have the form of brake disks being formed integrally with the shaft 72.

The first brake support portion 74 is associated with the first wheel 68 and therefore positioned closer to the first wheel 68 than to the second wheel 70 and the second brake support portion 76 is associated with the second wheel 70. The second brake support portion 76 is located closer to the second wheel 70 than to the first wheel 68.

Due to the optional nature of the second wheel 70 and the second brake support portion 76, both are represented in dotted lines in Figure 6.

In order to inspect the wheelset axle 64, the ultrasonic flaw detector 10 is placed in a first axial position A on the shaft 72 which is located between the first wheel 68 and the first brake support portion 74.

Subsequently, the ultrasonic flaw detector 10 is rotated around a circumference of the shaft 72 at this first axial position A and performs a first ultrasonic scan. The circumferential direction of the shaft 72 thus corresponds to the travelling direction 26.

As has already been mentioned above, the beam direction 78 of the ultrasonic probe 14 is tilted to the first lateral side 20a and the beam direction 80 of the ultrasonic probe 16 is be tilted to the second lateral side 20b. This is illustrated in Figure 7.

In this context, performing an ultrasonic scan may also comprise swiveling of the beam direction. In the example shown, the beam direction 78 of the probe 14 is swiveled between a beam direction 78a and a beam direction 78b.

The beam direction 80 of the probe 16 is swiveled between a beam direction 80a and a beam direction 80b.

Of course, the probes 12, 14 may also have beams that cover the volumes between the beam direction 78a and the beam direction 78b. In such a case, swiveling of the beam direction is not needed.

Combining the rotation of the ultrasonic flaw detector 10 and optionally the swiveling of the beam directions 78, 80, the entire volume of the wheelset axle 64 is inspected, except for a small portion being located under the ultrasonic flaw detector 10 and being indicated by A'.

For this reason, the ultrasonic flaw detector 10 is additionally placed in a second axial position B on the shaft 72 which is located on an axial side of the first brake support portion 74 opposing the first wheel 68.

Again, the ultrasonic flaw detector 10 is rotated around the circumference of the shaft 72 and performs a second ultrasonic scan. The second ultrasonic scan may also comprise swiveling of the beam directions 78, 80.

In doing so, 100% of the volume of the wheelset axle 64 shown in Figure 7 are inspected.

If the wheelset axle 64 comprises a second wheel 70 and a second brake support portion 76, the ultrasonic flaw detector 10 is additionally placed in a third axial position on the shaft 72 which is located between the second wheel 70 and the second brake support portion 76.

In this position a third ultrasonic scan is performed, which substantially corresponds to the first ultrasonic scan. Reference is made to the above explanations.

After that, the ultrasonic flaw detector 10 is placed in a fourth axial position on the shaft 72 which is located between the first brake support portion 74 and the second brake support portion 76. Then, the ultrasonic flaw detector 10 is rotated around the circumference of the shaft 72 and performs a fourth ultrasonic scan. This ultrasonic scan substantially corresponds to the second ultrasonic scan. Reference is made to the above explanations.

Consequently, the entire volume of the shaft 72 of a wheelset axle 64 comprising two wheels 68, 70 and two brake support portions 74, 76 is inspected.

It is noted that depending on the design of the ultrasonic flaw detector 10 the entire ultrasonic flaw detector 10 or just a probe portion thereof, i.e. the portion of the ultrasonic flaw detector 10 carrying the probe, may be placed in the first, second, third and fourth axial position. In case the entire ultrasonic flaw detector 10 is placed in this position, the entire ultrasonic flaw detector 10 may be designated a probe portion.

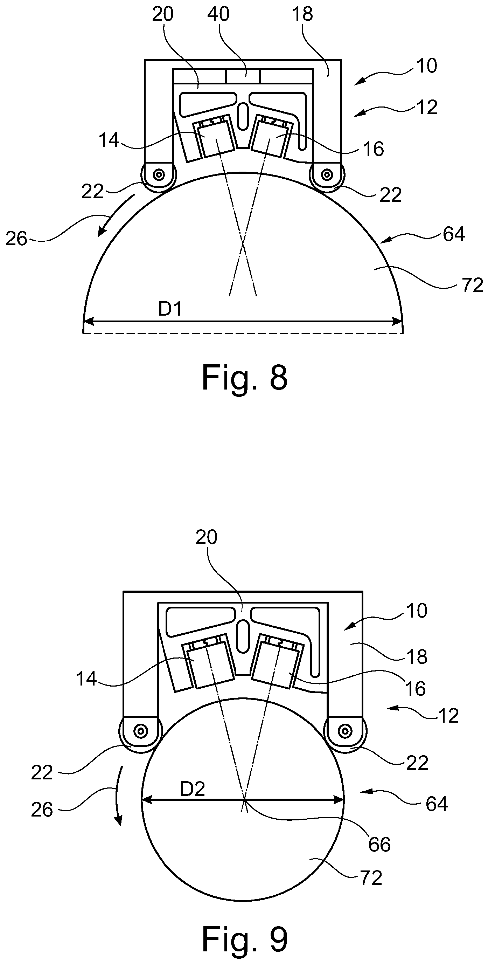

As can best be seen from Figures 8 and 9, the ultrasonic flaw detector 10 may be adapted to different diameters of shafts 72.

In order to perform a high quality ultrasonic scan the front sides 14a, 16a of respective ultrasonic probes 14, 16 need to be in close proximity to the surface of an object to be inspected. Consequently, in the present example, the front sides 14a, 16a need to be close to the circumference of the shaft 72. Additionally, the front sides 14a, 16b, ideally are oriented tangentially to the circumference of the shaft 72.

In the example shown in Figure 8, the ultrasonic flaw detector 10 is adapted for the inspection of a shaft 72 having a diameter D1, which is relatively big. In order to meet the above criteria, the spacer 40 is interposed between the probe holder 20 and the bracket 18.

In the example of Figure 9 the ultrasonic flaw detector 10 is adapted for the inspection of a shaft 72 having a diameter D2, which is smaller than diameter D1. In order to meet the above criteria, the spacer 40 is removed and the probe holder 20 is directly attached to the bracket 18. In the example of Figure 9 an intersection of the middle axes 46, 48 coincides with the axis 66 of rotation of the wheelset axle 64.

In other words, the probe holder 20 is movably mounted on the bracket 18 and therefore the ultrasonic flaw detector 10 may easily be adapted to different diameters.

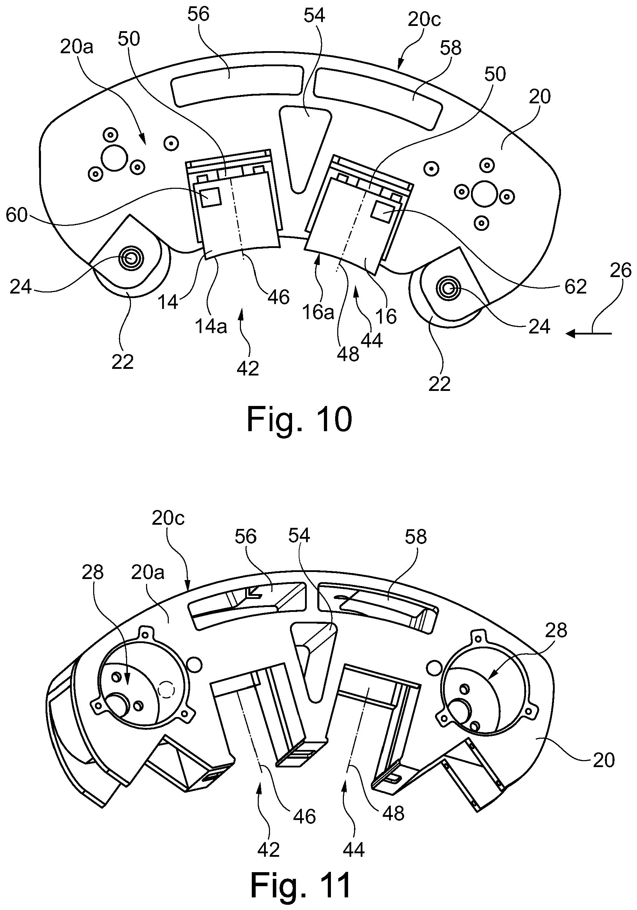

Figures 10 to 12 shows a second embodiment of the ultrasonic flaw detector 10. The ultrasonic flaw detector 10 of the second embodiment substantially corresponds to the one of the first embodiment so that only the differences with respect to the first embodiment will be explained in the following.

A first difference relates to the design of the probe support apparatus 12. In the second embodiment, the bracket 18 and the spacer 40 are omitted. Consequently, both the rollers 22 and the probes 14, 16 are directly attached to the probe holder 20.

A second difference relates to the fact that on the probe support apparatus 12 according to the second embodiment, two motor receptacles 28 are provided. Thus, two drive motors 30 may be used and both magnetic rollers 22 may be actively propelled.

According to a third difference, the probe support apparatus 12 according to the second embodiment has a back portion 20c having the shape of a convex arc.

It is noted that even though the back portion of the probe support apparatus 12 according to the first embodiment is shown with a substantially flat back portion, it is easily conceivable to provide a convex, arc-shaped back portion also in the first embodiment.

Furthermore, it is also conceivable that two drive motors 30 are provided in the ultrasonic flaw detector 10 of the first embodiment.

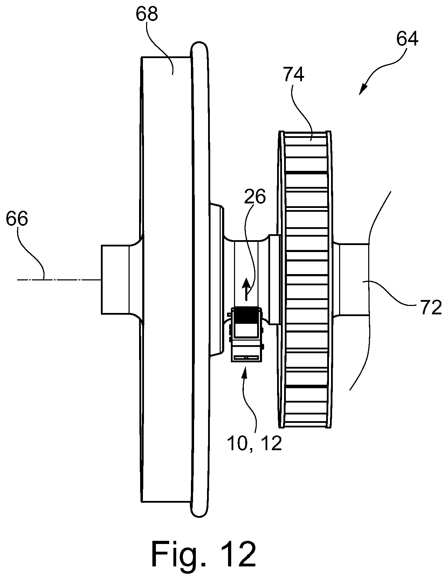

The use of the probe support apparatus 12 according to the second embodiment for inspecting a wheelset axle 64 is illustrated in Figure 12.

Since the method for inspecting the wheelset axle 64 is substantially the same for both embodiments of the probe support apparatus 12, reference is made to the above explanations.

## Claims

1. Probe support apparatus (12) for an ultrasonic flaw detector (10), comprising
a probe holder (20) having at least two receptacles (42, 44) for ultrasonic probes (14, 16), and
at least two rollers (22), wherein one roller (22) is rotatably supported at a front end of the probe support apparatus (12) and one roller (22) is rotatably supported at a back end of the probe support apparatus (12), when regarded in a travelling direction (26) of the probe support apparatus (12),
wherein the receptacles (42, 44) are inclined towards each other such that a middle axis (46) of a first receptacle (42) and a middle axis (48) of a second receptacle (44) are perpendicular to the axes (24) of rotation of the rollers (22)
**characterized in that**
the rollers (22) are magnetic rollers, and
a probe biasing means is provided in each receptacle, the probe biasing means being configured to bias the respective probe to the outside of the corresponding receptacle.

2. Probe support apparatus (12) according to claim 1, **characterized in that** the probe support apparatus (12) comprises a motor receptacle (28) and a drive motor (30) supported in the motor receptacle (28), wherein at least one of the magnetic rollers (22) is coupled with the drive motor (30), especially wherein at least one of the magnetic rollers (22) is coupled with the drive motor via (30) a belt drive (32).

3. Probe support apparatus (12) according to claim 1 or 2, **characterized in that** a back portion (20c) of the probe support apparatus (12) has the shape of a convex arc.

4. Probe support apparatus (12) according to any of the preceding claims, **characterized in that** the probe support apparatus (12) additionally comprises a bracket (18), wherein the magnetic rollers (22) are mounted on the bracket (18) and the at least two receptacles (42, 44) for ultrasonic probes (14, 16) are provided on the probe holder (20) being mounted on the bracket (18), in particular wherein the probe holder (20) is movably mounted on the bracket (18).

5. Probe support apparatus (12) according to claim 4, **characterized in that** the bracket (18) is substantially U-shaped when regarded along one of the axes (24) of rotation of the magnetic rollers (22),
wherein a first flank (18a) of the bracket (18) comprises the front end and a second flank (18b) of the bracket (18) comprises the back end and/or wherein the probe holder (20) is arranged between the flanks (18a, 18b) of the bracket (18).

6. Probe support apparatus (12) according to claim 4 or 5, **characterized in that** a spacer (40) is interposed between the bracket (18) and the probe holder (20).

7. Probe support apparatus (12) according to any of the preceding claims, **characterized in that**
a first opening (54) is provided between the receptacles (42, 44), connecting a first lateral side (20a) and a second, opposed lateral side (20b), when regarded in the travelling direction (26), and/or
a second opening (56, 58) is provided at the backside of each receptacle (42, 44), connecting a first lateral side (20a) and a second, opposed lateral side (20b), when regarded in the travelling direction (26).

8. Ultrasonic flaw detector (10) comprising a probe support apparatus (12) according to any one of the preceding claims and at least two ultrasonic probes (14, 16), wherein each of the receptacles (42, 44) holds one of the ultrasonic probes (14, 16), and wherein the middle axes (46, 48) of the receptacles (42, 44) are substantially perpendicular to the corresponding front sides (14a, 16a) of their respective ultrasonic probe (14, 16).

9. Ultrasonic flaw detector (10) according to claim 8, **characterized in that** a beam direction (78, 80) of one of the ultrasonic probes (14, 16) is tilted to a first lateral side (20a), when regarded in the travelling direction (26), and a beam direction (78, 80) of another one of the ultrasonic probes (14, 16) is tilted to a second lateral side (20b) being opposed to the first lateral side (20a).

10. Ultrasonic flaw detector (10) according to claim 8 or 9, **characterized in that** at least one, preferably each of the ultrasonic probes (14, 16) comprises a longitudinal wave generator (60, 62).

11. Method for inspecting a wheelset axle (64) using an ultrasonic flaw detector (10) according to any one of claims 8 to 10,
wherein the wheelset axle (64) is rotatable about an axis (66) of rotation and comprises at least a first wheel (68) located at an axial end of a shaft (72) and at least a first brake support portion (74) being provided on the shaft (72),
the method comprising the following steps:
a) Placing a probe portion of the ultrasonic flaw detector (10) at a first axial position (A) on the shaft (72) which is located between the first wheel (68) and the first brake support portion (74),
b) Rotating the probe portion around a circumference of the shaft (72) at the first axial position (A) while performing a first ultrasonic scan,
c) Placing the probe portion at a second axial position (B) on the shaft (72) which is located on an axial side of the first brake support portion (74) opposing the first wheel (68), and
d) Rotating the probe portion around a circumference of the shaft (72) at the second axial position (B), while performing a second ultrasonic scan.

12. Method according to claim 11, wherein the wheelset axle (64) additionally comprises a second wheel (70), wherein the first wheel (68) and the second wheel (70) are located at opposing axial ends of the shaft (72), and
wherein the wheelset axle (64) additionally comprises a second brake support portion (76) being provided on the shaft (72), and
wherein the first brake support portion (74) is positioned closer to the first wheel (68) than to the second wheel (70) and the second brake support portion (76) is positioned closer to the second wheel (70) than to the first wheel (68),
the method comprising the following steps:
a) Placing the probe portion of the ultrasonic flaw detector (10) at a third axial position on the shaft (72) which is located between the second wheel (70) and the second brake support portion (76),
b) Rotating the probe portion around a circumference of the shaft (72) at the third axial position while performing a third ultrasonic scan,
c) Placing the probe portion at a fourth axial position on the shaft (72) which is located between the first brake support portion (74) and the second brake support portion (76), and
d) Rotating the probe portion around a circumference of the shaft (72) at the fourth axial position, while performing a fourth ultrasonic scan.

13. Method according to claim 11 or 12, **characterized in that** it is performed in a mounted state of the wheelset axle (64).

## Patentansprüche

1. Sondenträgervorrichtung (12) für einen Ultraschallfehlerdetektor (10), umfassend
einem Sondenhalter (20), der mindestens zwei Aufnahmen (42, 44) für Ultraschallsonden (14, 16) aufweist, und
mindestens zwei Rollen (22), wobei eine Rolle (22) an einem vorderen Ende der Sondenträgervorrichtung (12) drehbar gelagert ist und eine Rolle (22) an einem hinteren Ende der Sondenträgervorrichtung (12) drehbar gelagert ist, wenn betrachtet in einer Bewegungsrichtung (26) der Sondenträgervorrichtung (12),
wobei die Aufnahmen (42, 44) zueinander geneigt sind, sodass eine Mittelachse (46) eines ersten Behälters (42) und eine Mittelachse (48) einer zweiten Aufnahme (44) senkrecht zu den Drehachsen (24) der Rollen (22) sind,
**dadurch gekennzeichnet, dass**
die Rollen (22) magnetische Rollen sind, und
eine Sondenvorspanneinrichtung in jeder Aufnahme bereitgestellt ist, wobei die Sondenvorspanneinrichtung konfiguriert ist, um die jeweilige Sonde zu der Außenseite der entsprechenden Aufnahme vorzuspannen.

2. Sondenträgervorrichtung (12) nach Anspruch 1, **dadurch gekennzeichnet, dass** die Sondenträgervorrichtung (12) eine Motoraufnahme (28) und einen in der Motoraufnahme (28) gelagerten Antriebsmotor (30) umfasst, wobei mindestens eine der magnetischen Rollen (22) mit dem Antriebsmotor (30) gekoppelt ist, insbesondere wobei mindestens eine der magnetischen Rollen (22) über einen Riementrieb (32) mit dem Antriebsmotor (30) gekoppelt ist.

3. Sondenträgervorrichtung (12) nach Anspruch 1 oder 2, **dadurch gekennzeichnet, dass** ein hinterer Abschnitt (20c) der Sondenträgervorrichtung (12) die Form eines konvexen Bogens aufweist.

4. Sondenträgervorrichtung (12) nach einem der vorherigen Ansprüche, **dadurch gekennzeichnet, dass** die Sondenträgervorrichtung (12) zusätzlich eine Halterung (18) aufweist, wobei die magnetischen Rollen (22) an der Halterung (18) gelagert sind und die mindestens zwei Aufnahmen (42, 44) für Ultraschallsonden (14, 16) an dem an der Konsole (18) gelagerten Sondenhalter (20) bereitgestellt sind, insbesondere wobei der Sondenhalter (20) bewegbar an der Konsole (18) gelagert ist.

5. Sondenträgervorrichtung (12) nach Anspruch 4, **dadurch gekennzeichnet, dass** die Halterung (18), wenn betrachtet entlang einer der Drehachsen (24) der magnetischen Rollen (22), im Wesentlichen U-förmig ist,
wobei eine erste Flanke (18a) der Halterung (18) das vordere Ende und eine zweite Flanke (18b) der Halterung (18) das hintere Ende umfasst und/oder wobei der Sondenhalter (20) zwischen den Flanken (18a, 18b) der Halterung (18) angeordnet ist.

6. Sondenträgervorrichtung (12) nach Anspruch 4 oder 5, **dadurch gekennzeichnet, dass** zwischen die Halterung (18) und den Sondenhalter (20) ein Abstandhalter (40) eingefügt ist.

7. Sondenträgervorrichtung (12) nach einem der vorherigen Ansprüche, **dadurch gekennzeichnet, dass**
zwischen den Aufnahmen (42, 44) eine erste Öffnung (54) bereitgestellt ist, die, wenn betrachtet in Fahrtrichtung (26), eine erste Längsseite (20a) und eine zweite, gegenüberliegende Längsseite (20b) verbindet, und/oder
an der Rückseite von jeder Aufnahme (42, 44) eine zweite Öffnung (56, 58) bereitgestellt ist, die, wenn betrachtet in Fahrtrichtung (26), eine erste Seitenseite (20a) und eine zweite, gegenüberliegende Seitenseite (20b) verbindet.

8. Ultraschallfehlerdetektor (10), umfassend eine Sondenträgervorrichtung (12) nach einem der vorherigen Ansprüche und mindestens zwei Ultraschallsonden (14, 16), wobei jede der Aufnahmen (42, 44) eine der Ultraschallsonden (14, 16) hält, und wobei die Mittelachsen (46, 48) der Aufnahmen (42, 44) im Wesentlichen senkrecht zu den entsprechenden Stirnseiten (14a, 16a) ihrer jeweiligen Ultraschallsonde (14, 16) sind.

9. Ultraschallfehlerdetektor (10) nach Anspruch 8, **dadurch gekennzeichnet, dass** eine Strahlrichtung (78, 80) einer der Ultraschallsonden (14, 16), wenn betrachtet in Fahrtrichtung (26), zu einer ersten Seite (20a) geneigt ist und eine Strahlrichtung (78, 80) einer anderen der Ultraschallsonden (14, 16) zu einer zweiten Seite (20b) gegenüber der ersten Seite (20a) geneigt ist.

10. Ultraschallfehlerdetektor (10) nach Anspruch 8 oder 9, **dadurch gekennzeichnet, dass** mindestens eine, vorzugsweise jede der Ultraschallsonden (14, 16) einen Längswellengenerator (60, 62) umfasst.

11. Verfahren zum Prüfen einer Radsatzachse (64) unter Verwendung eines Ultraschallfehlerdetektors (10) nach einem der Ansprüche 8 bis 10,
wobei die Radsatzachse (64) um eine Drehachse (66) drehbar ist und mindestens ein erstes Rad (68), das sich an einem axialen Ende eines Schafts (72) befindet, und mindestens einen ersten Bremsträgerabschnitt (74), der an dem Schaft (72) bereitgestellt ist, umfasst,
das Verfahren umfassend die folgenden Schritte:
a) Platzieren eines Sondenabschnitts des Ultraschallfehlerdetektors (10) in einer ersten axialen Position (A) an dem Schaft (72), die sich zwischen dem ersten Rad (68) und dem ersten Bremsstützabschnitt (74) befindet,
b) Drehen des Sondenabschnitts um einen Umfang des Schafts (72) an der ersten axialen Position (A), während eine erste Ultraschallabtastung durchgeführt wird,
c) Platzieren des Sondenabschnitts in einer zweiten axialen Position (B) auf dem Schaft (72), der sich auf einer axialen Seite des ersten Bremsstützabschnitts (74) gegenüber dem ersten Rad (68) befindet, und
d) Drehen des Sondenabschnitts um einen Umfang des Schafts (72) an der zweiten axialen Position (B), während eine zweite Ultraschallabtastung durchgeführt wird.

12. Verfahren nach Anspruch 11, wobei die Radsatzachse (64) zusätzlich ein zweites Rad (70) aufweist, wobei das erste Rad (68) und das zweite Rad (70) an gegenüberliegenden axialen Enden des Schafts (72) angeordnet sind, und
wobei die Radsatzachse (64) zusätzlich einen zweiten Bremsträger (76) umfasst, der an dem Schaft (72) bereitgestellt ist, und
wobei der erste Bremsträgerabschnitt (74) näher an dem ersten Rad (68) als an dem zweiten Rad (70) positioniert ist und der zweite Bremsträgerabschnitt (76) näher an dem zweiten Rad (70) als an dem ersten Rad (68) positioniert ist,
das Verfahren umfassend die folgenden Schritte:
a) Platzieren des Sondenabschnitts des Ultraschallfehlerdetektors (10) an einer dritten axialen Position an dem Schaft (72), die sich zwischen dem zweiten Rad (70) und dem zweiten Bremsträgerabschnitt (76) befindet,
b) Drehen des Sondenabschnitts um einen Umfang des Schafts (72) an der dritten axialen Position, während eine dritte Ultraschallabtastung durchgeführt wird,
c) Platzieren des Sondenabschnitts an einer vierten axialen Position an dem Schaft (72), die sich zwischen dem ersten Bremsträgerabschnitt (74) und dem zweiten Bremsträgerabschnitt (76) befindet, und
d) Drehen des Sondenabschnitts um den Umfang des Schafts (72) an der vierten axialen Position, während eine vierte Ultraschallabtastung durchgeführt wird.

13. Verfahren nach Anspruch 11 oder 12, **dadurch gekennzeichnet, dass** es in einem montierten Zustand der Radsatzachse (64) durchgeführt wird.

## Revendications

1. Appareil de support de sonde (12) pour un détecteur de défauts à ultrasons (10), comprenant
un porte-sonde (20) comportant au moins deux logements (42, 44) pour les sondes ultrasoniques (14, 16), et
au moins deux rouleaux (22), dans lequel un rouleau (22) est supporté de manière rotative à l'extrémité avant de l'appareil de support de sonde (12) et un rouleau (22) est supporté de manière rotative à l'extrémité arrière de l'appareil porte-sonde (12), lorsque l'on considère la direction de déplacement (26) de l'appareil de support de sonde (12),
dans lequel les réceptacles (42, 44) sont inclinés l'un vers l'autre de telle sorte qu'un axe médian (46) d'un premier réceptacle (42) et un axe médian (48) d'un deuxième réceptacle (44) sont perpendiculaires aux axes (24) de rotation des rouleaux (22)
**caractérisé en ce que**
les rouleaux (22) sont des rouleaux magnétiques, et
un moyen de polarisation de la sonde est prévu dans chaque réceptacle, le moyen de polarisation de la sonde étant configuré pour polariser la sonde respective vers l'extérieur du réceptacle correspondant.

2. Appareil de support de sonde (12) selon la revendication 1, **caractérisé en ce que** l'appareil de support de sonde (12) comprend un réceptacle de moteur (28) et un moteur d'entraînement (30) supporté dans le réceptacle de moteur (28), dans lequel au moins un des rouleaux magnétiques (22) est couplé au moteur d'entraînement (30), en particulier dans lequel au moins un des rouleaux magnétiques (22) est couplé au moteur d'entraînement par l'intermédiaire (30) d'une courroie d'entraînement (32).

3. Appareil porte-sonde (12) selon la revendication 1 ou 2, **caractérisé en ce qu'**une partie arrière (20c) de l'appareil de support de sonde (12) présente la forme d'un arc convexe.

4. Appareil de support de sonde (12) selon l'une quelconque des revendications précédentes, **caractérisé en ce que** l'appareil porte-sonde (12) comprend en outre un support (18), dans lequel les rouleaux magnétiques (22) sont montés sur le support (18) et les au moins deux réceptacles (42, 44) pour les sondes à ultrasons (14, 16) sont ménagés sur le porte-sonde (20) monté sur le support (18), en particulier dans lequel le porte-sonde (20) est monté de manière mobile sur le support (18).

5. Appareil de support de sonde (12) selon la revendication 4, **caractérisé en ce que** le support (18) est sensiblement en forme de U lorsqu'il est considéré le long de l'un des axes (24) de rotation des rouleaux magnétiques (22),
dans lequel un premier flanc (18a) du support (18) comprend l'extrémité avant et un deuxième flanc (18b) du support (18) comprend l'extrémité arrière et/ou dans lequel le porte-sonde (20) est disposé entre les flancs (18a, 18b) du support (18).

6. Appareil de support de sonde (12) selon la revendication 4 ou 5, **caractérisé en ce qu'**une entretoise (40) est interposée entre le support (18) et le porte-sonde (20).

7. Appareil de support de sonde (12) selon l'une quelconque des revendications précédentes, **caractérisé en ce que**
une première ouverture (54) est ménagée entre les réceptacles (42, 44), reliant un premier côté latéral (20a) et un deuxième côté latéral opposé (20b), dans le sens de la marche (26), et/ou
une deuxième ouverture (56, 58) est prévue à l'arrière de chaque réceptacle (42, 44), reliant un premier côté latéral (20a) et un deuxième côté latéral opposé (20b), lorsqu'ils sont considérés dans la direction de déplacement (26).

8. Détecteur de défauts à ultrasons (10) comprenant un appareil de support de sonde (12) selon l'une quelconque des revendications précédentes et au moins deux sondes à ultrasons (14, 16), dans lequel chacun des réceptacles (42, 44) contient une des sondes à ultrasons (14, 16), et dans lequel les axes médians (46, 48) des réceptacles (42, 44) sont sensiblement perpendiculaires aux faces avant correspondantes (14a, 16a) de leur sonde à ultrasons respective (14, 16).

9. Détecteur de défauts à ultrasons (10) selon la revendication 8, **caractérisé en ce qu'**une direction de faisceau (78, 80) de l'une des sondes à ultrasons (14, 16) est inclinée vers un premier côté latéral (20a), lorsqu'elle est considérée dans la direction de déplacement (26), et une direction de faisceau (78, 80) d'une autre des sondes à ultrasons (14, 16) est inclinée vers un deuxième côté latéral (20b) opposé au premier côté latéral (20a).

10. Détecteur de défauts à ultrasons (10) selon la revendication 8 ou 9, **caractérisé par le fait qu'**au moins une, de préférence chacune des sondes à ultrasons (14, 16) comprend un générateur d'ondes longitudinales (60, 62).

11. Procédé d'inspection d'un essieu de roue (64) à l'aide d'un détecteur de défauts à ultrasons (10) selon l'une quelconque des revendications 8 à 10,
dans lequel l'axe de l'essieu (64) tourne autour d'un axe (66) de rotation et comprend au moins une première roue (68) située à une extrémité axiale d'un arbre (72) et au moins une première partie de support de frein (74) située sur l'arbre (72),
le procédé comportant les étapes suivantes :
a) placement d'une partie de la sonde du détecteur de défauts à ultrasons (10) dans une première position axiale (A) sur l'arbre (72) qui est situé entre la première roue (68) et la première partie de support de frein (74),
b) rotation de la partie de la sonde autour d'une circonférence de l'arbre (72) à la première position axiale (A) tout en effectuant un premier balayage ultrasonique,
c) placement de la partie sonde dans une deuxième position axiale (B) sur l'arbre (72) qui est situé sur un côté axial de la première partie de support de frein (74) opposée à la première roue (68), et
d) rotation de la partie de la sonde autour d'une circonférence de l'arbre (72) au niveau de la deuxième position axiale (B), tout en effectuant un deuxième balayage ultrasonique.

12. Procédé selon la revendication 11, dans lequel l'axe de l'essieu monté (64) comprend en outre une deuxième roue (70), la première roue (68) et la deuxième roue (70) étant situées à des extrémités axiales opposées de l'arbre (72), et
dans lequel l'axe de l'essieu monté (64) comprend en outre une deuxième partie de support de frein (76) située sur l'arbre (72), et
dans lequel la première partie de support de frein (74) est positionnée plus près de la première roue (68) que de la deuxième roue (70) et la deuxième partie de support de frein (76) est positionnée plus près de la deuxième roue (70) que de la première roue (68),
le procédé comportant les étapes suivantes :
a) placement de la partie sonde du détecteur de défauts à ultrasons (10) dans une troisième position axiale sur l'arbre (72) qui est situé entre la deuxième roue (70) et la deuxième partie support de frein (76),
b) rotation de la partie de la sonde autour de la circonférence de l'arbre (72) au niveau de la troisième position axiale tout en effectuant un troisième balayage ultrasonique,
c) placement de la partie sonde dans une quatrième position axiale sur l'arbre (72) qui est situé entre la première partie de support de frein (74) et la deuxième partie de support de frein (76), et
d) rotation de la partie de la sonde autour de la circonférence de l'arbre (72) à la quatrième position axiale, tout en effectuant un quatrième balayage ultrasonique.

13. Procédé selon la revendication 11 ou 12, **caractérisé par le fait qu'**il est exécuté dans un état monté de l'axe de l'essieu (64).
